Europäisches Patentamt

(19) European Patent Office

Office européen des brevets

(11) Numéro de publication: **0 191 518**
**B1**

(12) **FASCICULE DE BREVET EUROPEEN**

(45) Date de publication du fascicule du brevet:
**03.05.89**

(51) Int. Cl.⁴: **C 01 B 33/32**

(21) Numéro de dépôt: **86200101.3**

(22) Date de dépôt: **23.01.86**

(54) Procédé pour inhiber l'agglutination de particules de silicate de métal alcalin et compositions de matières comprenant des particules de silicate de métal alcalin.

(30) Priorité: **04.02.85 FR 8501609**

(43) Date de publication de la demande:
**20.08.86 Bulletin 86/34**

(45) Mention de la délivrance du brevet:
**03.05.89 Bulletin 89/18**

(84) Etats contractants désignés:
**AT BE CH DE FR GB IT LI LU NL SE**

(56) Documents cités:
**EP-A- 0 083 125**
**BE-A- 766 422**
**DE-B- 2 525 582**
**DE-C- 564 124**
**US-A- 3 490 744**

**British Chemical Engineering, Jan 1966, Vol. II, no. 1, pp. 34-38**

(73) Titulaire: **SOLVAY & Cie (Société Anonyme), Rue du Prince Albert, 33, B-1050 Bruxelles (BE)**

(72) Inventeur: **Brahm, Jacques, Snoekgracht, 10, B-1850 Grimbergen (BE)**

(74) Mandataire: **Anthoine, Paul, SOLVAY & Cie Département de la Propriété Industrielle 310, rue de Ransbeek, B-1120 Bruxelles (BE)**

ACTORUM AG

## Description

La présente invention concerne un procédé pour inhiber l'agglutination de particules de silicate de métal alcalin.

On sait que les silicates des métaux alcalins, notamment le métasilicate de sodium pentahydraté, trouvent de nombreuses applications dans l'industrie, notamment dans la préparation d'agents de lavage, de rinçage ou de nettoyage de textiles, comme adjuvant de blanchiment, pour le dégraissage de métaux et d'objets métalliques et pour le désencrage de vieux papiers.

Ces produits ont toutefois la propriété d'être hygroscopiques et, lorsqu'ils sont à l'état de particules, notamment de poudres, ils présentent une tendance naturelle à l'agglutination.

On a déjà proposé divers procédés pour lutter contre cet inconvénient. Ainsi, par exemple, dans le document DE-A-2 525 581 on a proposé d'empêcher l'agglutination du métasilicate de sodium anhydre en y ajoutant une solution saturée d'acide gluconique ou d'un sel de cet acide, par exemple le gluconate de sodium. De manière similaire, dans le document DE-B-2 525 582, on a proposé d'ajouter à du métasilicate de sodium anhydre, de l'acide phosphorique ou un sel de cet acide, notamment du phosphate monosodique.

Ces procédés connus se sont révélés, en pratique, peu satisfaisants, leur action sur l'agglutination des particules de silicate de métal alcalin tendant à décliner rapidement et à disparaître.

L'invention vise à remédier à cet inconvénient des procédés connus, en fournissant un procédé nouveau pour inhiber la tendance à l'agglutination des particules de silicate de métal alcalin (notamment de métasilicate de sodium pentahydraté), dont l'action soit plus efficace et perdure dans le temps.

L'invention concerne dès lors un procédé pour inhiber l'agglutination de particules de silicate de métal alcalin, selon lequel on mélange aux particules un composé contenant des ions de ferrocyanure.

Dans le procédé selon l'invention, le composé contenant des ions de ferrocyanure peut être un ferrocyanure métallique. On utilise avantageusement du ferrocyanure de métal alcalin, le ferrocyanure de potassium ayant la préférence.

La quantité optimum du composé contenant des ions de ferrocyanure dépend de divers paramètres, notamment du silicate de métal alcalin, de sa granulométrie et dudit composé; elle peut être déterminée aisément dans chaque cas particulier par un travail de routine au laboratoire. Dans le cas particulier où le procédé est appliqué à du métasilicate de sodium pentahydraté, on utilise avantageusement, pour le composé contenant des ions de ferrocyanure, du ferrocyanure de potassium en quantité au moins égale à 15 mg par kg de métasilicate de sodium pentahydraté; les quantités supérieures à 25 mg par kg sont préférées, celles comprises entre 40 et 70 mg par kg convenant spécialement bien.

Dans le procédé selon l'invention, le composé contenant des ions de ferrocyanure peut être mis en œuvre à l'état solide ou à l'état liquide. Dans le cas d'un composé solide, celui-ci consiste en particules que l'on mélange aux particules de silicate de métal alcalin pour réaliser un mélange le plus homogène possible.

Dans une forme de réalisation préférée du procédé selon l'invention, le composé contenant des ions de ferrocyanure est mis en œuvre à l'état liquide. Dans l'exécution de cette forme de réalisation du procédé selon l'invention, on mélange ledit composé, à l'état liquide, avec les particules de silicate de métal alcalin, et on règle la température, pendant l'exécution du mélange, pour que le composé contenant les ions ferrocyanure soit stable à l'état liquide et que les particules de silicate de métal alcalin soient stables à l'état solide, et on traite ensuite le mélange résultant pour éliminer tout composé liquide de ce mélange. En règle générale, ce dernier traitement est exécuté lorsque le mélange résultant est homogène.

Dans une variante avantageuse de cette forme de réalisation du procédé selon l'invention, le composé contenant des ions ferrocyanure est mis en œuvre à l'état d'une solution dudit composé dans un solvant, par exemple de l'eau, et, pour éliminer le solvant du mélange résultant précité, on soumet ce dernier à un séchage. Dans cette variante d'exécution du procédé selon l'invention, on utilise avantageusement des solutions aqueuses de ferrocyanure de potassium, contenant au moins 1% en poids de ferrocyanure de potassium, de préférence plus de 5%; les solutions aqueuses contenant entre 10 et 20% en poids de ferrocyanure de potassium se sont révélées les plus avantageuses. Dans cette forme de réalisation de l'invention, le mélange de la solution avec les particules de silicate de sodium peut être opéré à toutes températures compatibles avec le maintien du silicate de sodium à l'état solide et de la solution à l'état liquide. Par exemple, dans le cas particulier du métasilicate de sodium pentahydraté, il convient généralement de réaliser le mélange à une température qui n'excède pas 70°C, par exemple entre 15 et 65°C, les températures comprises entre 40 et 60°C étant spécialement avantageuses. Le séchage est de préférence opéré à température modérée, n'excédant pas 60°C, par exemple entre 20 et 60°C.

A l'issue du procédé selon l'invention, on obtient des compositions de matières comprenant des particules de silicate de métal alcalin dont la tendance à l'agglutination est fortement réduite.

L'invention concerne dès lors aussi des compositions de matières comprenant des particules de silicate de métal alcalin et un additif destiné à inhiber une agglutination des particules, dans lesquelles ledit additif comprend un composé contenant des ions de ferrocyanure.

L'invention s'applique notamment aux compositions de matières comprenant des particules de silicate de sodium; elle s'applique spécialement bien aux compositions de matières comprenant des particules de métasilicate de sodium hydraté, par exemple pentahydraté, de formule générale $Na_2O \cdot SiO_2 \cdot 5H_2O$.

L'invention s'applique en principe aux particules de toutes dimensions, mais elle présente d'autant plus d'intérêt que la granulométrie du silicate de métal alcalin est plus fine. Elle trouve une application spécialement intéressante dans le cas où le silicate de métal alcalin est à l'état de particules de diamètre moyen inférieur à 2 mm, et plus généralement à 1 mm, notamment compris entre 100 et 750 µm.

Afin de mettre en relief les avantages procurés par la présente invention, on va rendre compte ci-après d'essais qui ont été effectués par la Demanderesse.

Les essais ont porté sur une poudre de silicate de sodium pentahydraté à l'état de particules de diamètre moyen compris entre 0,37 et 0,70 mm.

Pour l'exécution des essais, on a utilisé un petit mélangeur de laboratoire de 2 litres de capacité, fabriqué par Gebr. Lödige-Maschinenbau GmbH, sous la dénomination M5G dans lequel on a introduit 750 gr de la poudre de métasilicate de sodium pentahydraté et, le cas échéant, un additif anti-agglutination que l'on mélange pendant 3 minutes pour obtenir une composition de matière pulvérulente homogène. Celle-ci a alors été retirée du mélangeur et refroidie en récipient fermé, puis soumise à un test d'agglutination. A cet effet, on a introduit 164 gr de la poudre dans un sachet de polyéthylène que l'on a obturé et disposé dans un cylindre en polychlorure de vinyle de 10 cm de hauteur et de 5,2 cm de diamètre intérieur (section 21 cm$^2$). On a comprimé le sachet dans le cylindre au moyen d'un piston de 5 cm de diamètre et de 5 cm de hauteur portant une charge de 20 kg. A l'issue d'une durée définie de mise sous charge, on a retiré le sachet du cylindre, on l'a ouvert et on a examiné visuellement la poudre. Les résultats ont été cotés comme suit:

— 0: absence de nodules
— 1: quelques petits nodules ne pouvant être pris entre les doigts
— 2: nodules plus nombreux ne pouvant être pris entre les doigts
— 3: petits nodules pouvant être pris entre les doigts
— 4: quelques gros nodules pouvant être pris entre les doigts
— 5: prise en masse complète.

Dans chaque essai, on a effectué quatre tests d'agglutination, avec des durées de mise sous charge respectivement égales à un, deux, sept et quatorze jours.

*Première série d'essais (conformes à l'invention)*

Dans les exemples d'application dont la description va suivre, l'additif anti-agglutination utilisé a été du ferrocyanure de potassium. Celui-ci a été ajouté à la poudre de métasilicate de sodium pentahydraté sous la forme d'une solution aqueuse. La composition de matière recueillie à l'issue du mélange de la poudre avec la solution a été soumise telle quelle aux tests d'agglutination décrits plus haut ou a été au préalable séchée à 50°C.

*Exemple 1*

On a mis en œuvre une solution aqueuse contenant 10 g de ferrocyanure de potassium par kg. La solution a été utilisée en une quantité réglée pour apporter 25 mg de ferrocyanure de potassium par kg de métasilicate de sodium pentahydraté. Le mélange de la poudre de métasilicate de sodium et de la solution de ferrocyanure de potassium a été effectué à 25°C. La composition de matière recueillie à l'issue du mélange a été séchée à 50°C pendant une heure, pour éliminer l'eau apportée par la solution de ferrocyanure de potassium. Les résultats des tests d'agglutination sont mentionnés au tableau 1.

### TABLEAU 1

| Durée de la mise sous charge (jours) | Cote d'agglutination |
|:---:|:---:|
| 1 | 0 |
| 2 | 0,5 |
| 7 | 3 |
| 14 | 4 |

*Exemple 2*

On a répété l'essai de l'exemple 1, en mettant en œuvre une quantité de solution suffisante pour apporter 100 mg de ferrocyanure de potassium par kg de métasilicate de sodium pentahydraté.

Les tests d'agglutination ont révélé une cote d'agglutination égale à 1, à l'issue d'une durée de mise sous charge de 14 jours.

*Exemple 3*

Dans cet essai, on a utilisé une solution aqueuse contenant 333 g de ferrocyanure de potassium par kg, que l'on a mise en œuvre en une quantité réglée pour apporter 50 mg de ferrocyanure de potassium par kg de métasilicate de sodium pentahydraté. Le mélange a été opéré à 25°C, comme à l'exemple 1. La composition de matière recueillie à l'issue du mélange a été séchée, comme à l'exemple 1, à 50°C pendant une heure, puis soumise aux tests d'agglutination. Les résultats des tests sont mentionnés au tableau 2.

### TABLEAU 2

| Durée de la mise sous charge (jours) | Cote d'agglutination |
|:---:|:---:|
| 1 | 1,5 |
| 2 | 2,5 |
| 14 | 3 |

*Example 4*

Dans cet essai, on a utilisé une solution aqueuse contenant 166 g de ferrocyanure de potassium par kg, que l'on a mise en œuvre en une quantité réglée pour apporter 50 mg de ferrocyanure de potassium par kg de métasilicate de sodium pentahydraté. Le mélange de la solution avec le métasilicate de sodium pentahydraté a été opéré à 50°C. La composition de matière recueillie à l'issue du mélange a été séchée à 50°C pendant une heure, puis soumise aux tests d'agglutination dont les résultats sont mentionnés au tableau 3.

### TABLEAU 3

| Durée de la mise sous charge (jours) | Cote d'agglutination |
|---|---|
| 1 | 3 |
| 2 | 1 |
| 7 | 1 |
| 14 | 1 |

### Exemple 5

On a répété l'ensemble des opérations de l'exemple 4, à l'exception de l'étape finale de séchage, qui n'a pas été exécutée.

Les résultats des tests d'agglutination sont mentionnés au tableau 4.

### TABLEAU 4

| Durée de la mise sous charge (jours) | Cote d'agglutination |
|---|---|
| 1 | 1 |
| 2 | 2 |
| 14 | 1 |

*Deuxième série d'essais (essais de référence)*

### Exemple 6

On a soumis aux tests d'agglutination une poudre de métasilicate de sodium pentahydraté telle quelle, exempte d'additif anti-agglutination. Les tests ont revélé une cote d'agglutination constamment égale à 4, après un, deux, sept et quatorze jours de mise sous charge.

### Exemple 7

On a soumis aux tests d'agglutination une poudre de métasilicate de sodium pentahydraté à laquelle on a mélangé 1% en poids d'une poudre de gluconate de sodium (additif anti-agglutination).

Les résultats des tests d'agglutination sont mentionnés au tableau 5.

### TABLEAU 5

| Durée de la mise sous charge (jours) | Cote d'agglutination |
|---|---|
| 1 | 0 |
| 2 | 3 |
| 7 | 3,5 |
| 14 | 4 |

### Exemple 8

On a soumis aux tests d'agglutination une poudre de métasiliate de sodium pentahydraté, à laquelle on a mélangé 1% en poids de phosphate monosodique à titre d'additif anti-agglutination.

Les résultats des tests d'agglutination sont mentionnés au tableau 6.

### TABLEAU 6

| Durée de la mise sous charge (jours) | Cote d'agglutination |
|---|---|
| 1 | 2 |
| 2 | 3 |
| 7 | 4 |
| 14 | 5 |

Une comparaison des résultats de la première série d'essais (exemples 1 à 5, conformes à l'invention) avec ceux de la deuxième série d'essais (exemples 6 à 8) montrent le progrès apporté par l'invention.

### Revendications

1. Procédé pour inhiber l'agglutination de particules de silicate de métal alcalin, caractérisé en ce qu'on mélange aux particules un composé contenant des ions de ferrocyanure.

2. Procédé selon la revendication 1, caractérisé en ce que le composé contenant des ions de ferrocyanure est mis en œuvre à l'état d'une solution aqueuse que l'on mélange avec les particules de silicate de métal alcalin, en réglant la température pour que la-dite solution soit stable à l'état liquide et lesdites particules soient stables à l'état solide, et on soumet le mélange résultant à un séchage pour en éliminer tout composant liquide.

3. Procédé selon la revendication 2, caractérisé en ce qu'on exécute le mélange à une température égale au maximum à 70°C et on exécute le séchage à une température au maximum égale à 60°C.

4. Procédé selon l'une quelconque des revendications 1 à 3, caractérisé en ce que le composé contenant des ions de ferrocyanure est du ferrocyanure de potassium.

5. Procédé selon l'une quelconque des revendications 1 à 4, caractérisé en ce qu'on l'applique à des particules de métasilicate de sodium pentahydraté.

6. Procédé selon l'une quelconque des revendications 1 à 5, caractérisé en ce que le composé contenant des ions de ferrocyanure est mis en œuvre en une quantité comprise entre 25 et 100 mg par kg de silicate de métal alcalin.

7. Procédé selon l'une quelconque des revendications 2 à 6, caractérisé en ce qu'on met en œuvre une solution aqueuse contenant au moins 1% en poids dudit composé.

8. Composition de matières comprenant des particules de silicate de métal alcalin et un additif destiné à inhiber une agglutination des particules, caractérisées en ce que l'additif comprend un composé contenant des ions de ferrocyanure.

9. Compositions selon la revendication 8, caractérisées en ce que le silicate de métal alcalin est du métasilicate de sodium pentahydraté et le composé contenant des ions de ferrocyanure est du ferrocyanure de potassium.

**Patentansprüche**

1. Verfahren zur Verhinderung des Zusammenbackens von Alkalimetallsilkatteilchen, dadurch gekennzeichnet, daß man den Teilchen eine Verbindung zumischt, die Ferrocyanid-Ionen enthält.

2. Verfahren nach Anspruch 1, dadurch gekennzeichnet, daß die Ferrocyanid-Ionen-enthaltende Verbindung eingesetzt wird in Form einer wäßrigen Lösung, die man mit den Alkalimetallsilikatteilchen vermischt, wobei man die Temperatur so regelt, daß die genannte Verbindung und die genannten Teilchen stabil sind und daß man die so erhaltene Mischung einer Trocknung unterwirft, um jeden flüssigen Bestandteil zu entfernen.

3. Verfahren nach Anspruch 2, dadurch gekennzeichnet, daß man die Vermischung bei einer Temperatur von maximal 70°C durchführt und daß man die Trocknung bei einer Temperatur von maximal 60°C durchführt.

4. Verfahren nach einem der Ansprüche 1 bis 3, dadurch gekennzeichnet, daß die Ferrocyanid-Ionen-enthaltende Verbindung Kaliumferrocyanid ist.

5. Verfahren nach einem der Ansprüche 1 bis 4, dadurch gekennzeichnet, daß man es auf Natriummetasilikat-Pentahydrat-Teilchen anwendet.

6. Verfahren nach einem der Ansprüche 1 bis 5, dadurch gekennzeichnet, daß die Ferrocyanid-Ionen-enthaltende Verbindung eingesetzt wird in einer Menge von 25 bis 100 mg je kg Alkalimetallsilikat.

7. Verfahren nach einem der Ansprüche 2 bis 6, dadurch gekennzeichnet, daß man eine wäßrige Lösung einsetzt, die wenigstens 1 Gew.-% der genannten Verbindung enthält.

8. Materialzusammensetzungen enthaltend Alkalimetallsilikatteilchen und einen Zusatz, der das Zusammenbacken der Teilchen verhindern soll, dadurch gekennzeichnet, daß der Zusatz eine Verbindung umfaßt, die Ferrocyanid-Ionen enthält.

9. Zusammensetzungen nach Anspruch 8, dadurch gekennzeichnet, daß das Alkalimetallsilikat Natriummetasilikat-Pentahydrat ist und daß die Ferrocyanid-Ionen-enthaltende Verbindung Kaliumferrocyanid ist.

**Claims**

1. Process for inhibiting the agglutination of alkali metal silicate particles, characterized in that a compound containing ferrocyanide ions is mixed with the particles.

2. Process according to Claim 1, characterized in that the compound containing ferrocyanide ions is used in the form of an aqueous solution which is mixed with the alkali metal silicate particles, the temperature being controlled so that the said compound and the said particles are stable, and the resulting mixture is subjected to a drying operation in order to remove any liquid component therefrom.

3. Process according to Claim 2, characterized in that the mixing is performed at a temperature not exceeding 70°C and the drying is performed at a temperature not exceeding 60°C.

4. Process according to any one of Claims 1 to 3, characterized in that the compound containing ferrocyanide ions is potassium ferrocyanide.

5. Process according to any one of Claims 1 to 4, characterized in that it is applied to particles of sodium metasilicate pentahydrate.

6. Process according to any one of Claims 1 to 5, characterized in that the compound containing ferrocyanide ions is used in a quantity of between 25 and 100 mg per kg of alkali metal silicate.

7. Process according to any one of Claims 2 to 6, characterized in that an aqueous solution containing at least 1 % by weight of the said compound is used.

8. Compositions of matter comprising alkali metal silicate particles and an additive intended to inhibit an agglutination of the particles, characterized in that the additive comprises a compound containing ferrocyanide ions.

9. Compositions according to Claim 8, characterized in that the alkali metal silicate is sodium metasilicate pentahydrate and the compound containing ferrocyanide ions is potassium ferrocyanide.